Europäisches Patentamt

European Patent Office

Office européen des brevets

(19)

(11) Veröffentlichungsnummer: **0 062 279**
**B1**

(12) **EUROPÄISCHE PATENTSCHRIFT**

(45) Veröffentlichungstag der Patentschrift :
30.01.85

(51) Int. Cl.⁴ : **G 11 B   5/58, G 11 B 21/10**

(21) Anmeldenummer : 82102649.9

(22) Anmeldetag : 29.03.82

(54) Verfahren zum Erkennen einer Kante eines magnetischen Mediums und Vorrichtung zur Durchführung des Verfahrens.

(30) Priorität : 31.03.81 DE 3112886

(43) Veröffentlichungstag der Anmeldung :
13.10.82 Patentblatt 82/41

(45) Bekanntmachung des Hinweises auf die Patenterteilung : 30.01.85 Patentblatt 85/05

(84) Benannte Vertragsstaaten :
DE GB

(56) Entgegenhaltungen :
EP-A- 0 032 660
BE-A-   627 373
FR-A- 2 138 653
GB-A- 1 478 339
GB-A- 2 008 290
PATENTS ABSTRACTS OF JAPAN, Band 2, Nr. 62, 11. Mai 1978, Seite 1943E78
PATENTS ABSTRACTS OF JAPAN, Band 5, Nr. 5, 14. Januar 1981, Seite 677(P-44)
IBM TECHNICAL DISCLOSURE BULLETIN, Band 9, Nr. 11, April 1967, Seiten 1499-1500, New York, USA HAGOPIAN: "Automatic magnetic track seeking system"
PATENTS ABSTRACTS OF JAPAN, Band 5, Nr. 1, 8. Januar 1981, Seite P43-673
PATENTS ABSTRACTS OF JAPAN, Band 1, Nr. 152, 7. Dezember 1977, Seite 8010-E-78

(73) Patentinhaber : TANDBERG DATA A/S
Kjelsasvelen 161 Postboks 9 Korsvoll
N-Oslo 8 (NO)

(72) Erfinder : Solhjell, Erik
Hesteskoen 10F
N-Oslo 4 (NO)

(74) Vertreter : Mehl, Ernst, Dipl.-Ing. et al
Postfach 22 01 76
D-8000 München 22 (DE)

**Beschreibung**

Die Erfindung betrifft ein Verfahren zum Erkennen einer Kante eines magnetischen Mediums und eine Vorrichtung zur Durchführung des Verfahrens.

Bekanntlich kann Information auf ein magnetisches Medium, beispielsweise eine Magnetplatte oder ein Magnetband, durch Erzeugung von magnetischen Flußwechseln ein- und ausgeschrieben werden. Dazu kann ein Lese- und Schreibsystem, beispielsweise ein Magnetkopf mit einem Schreib- und Lesespalt verwendet werden. Elektrische Signale werden beim Einschreiben durch Induktion am Schreibspalt in eine Änderung des Magnetflusses gewandelt, bzw. Magnetflußänderungen auf dem Medium werden am Lesespalt abgetastet und in elektrische Signale gewandelt. Der Schreibspalt und der Lesespalt können im Vergleich zur Oberfläche des Mediums klein sein, so daß eine Anzahl von Spuren, die durch Bewegung des Mediums am Spalt vorbei entstehen, aufgezeichnet werden können. Wenn diese Spuren beispielsweise mit einem anderen als dem aufzeichnenden Lese- und Schreibsystem gelesen werden, ist es wesentlich, daß der Lesespalt genau über der vom Schreibkopf erzeugten Spur angeordnet ist.

Bei einem Magnetband besteht eine Methode, den Lesespalt auf die vom Schreibspalt aufgezeichnete Spur auszurichten, darin, die Kante des Magnetbandes als Referenz zu verwenden. Bereits beim Aufzeichnen wird der Schreibspalt am Übergang von einer Spur auf eine andere, ausgehend von der Kante, um einen festgelegten Spurabstand versetzt. Ebenso wird der Lesespalt beim Übergang von einer Spur auf die andere, ausgehend von der Kante, um diesen Spurabstand versetzt. Die Ausgangsposition des Schreib- und Lesesystems am Referenzpunkt kann manuell beispielsweise in Abhängigkeit von einer Bandführung festgelegt werden. Nachteilig dabei ist, daß Lageveränderungen des Abtastsystems oder der Bandführung und Herstellungstoleranzen nicht berücksichtigt werden können, da die Einstellung gewöhnlich nur einmal vorgenommen wird.

Aus einer Veröffentlichung in: Patents Abstracts of Japan, Band 2, Nr. 62, 11. Mai 1978, Seite 1943E78 ist ein Verfahren zum Justieren eines Lese- und Schreibsystems relativ zu einem magnetischen Aufzeichnungsmedium bekannt, bei dem während des Justiervorgangs ein mit einer besonderen Referenzspur versehenes Medium eingelegt wird. Auf der Referenzspur sind Signale einer vorgegebenen Frequenz aufgezeichnet. Während der Relativbewegung zwischen dem Medium und der Leseeinrichtung des Lese- und Schreibsystems erzeugte Lesesignale werden verstärkt und gefiltert und einem Spannungsmesser zugeführt. In Abhängigkeit von dem vom Spannungsmesser angezeigten Wert wird das Lese- und Schreibsystem justiert.

Dieses bekannte Verfahren ist für das Erkennen der Kante des magnetischen Mediums nicht geeignet. Außerdem ist der Magnetkopf bei diesem bekannten Verfahren lediglich für die Justierbarkeit verschiebbar angeordnet. Hinzu kommt, daß mit dem bekannten Verfahren nur ein Medium benutzt werden kann, das bereits die vorgegebene Referenzspur enthält.

Die Verschiebung eines Lese- und Schreibsystems senkrecht zur Bewegungsrichtung des Mediums ist der BE-PS 627 373 zu entnehmen. Dort erfolgt die Verschiebung unter Verwendung einer einen Servomotor enthaltenden Einstellvorrichtung.

Die FR-PS 2 138 653 offenbart ein Verfahren zur Korrektur der Seitenverschiebungen eines Magnetbands. Bei diesem bekannten Verfahren sind auf dem Medium zwei Referenzspuren vorgesehen, auf denen gegen die Bewegungsrichtung des Mediums geneigte Markierungen aufgezeichnet sind. Unter Verwendung von zwei Leseeinrichtungen werden die zeitlichen Differenzen der Lesesignale beim Lesen der Markierungen ermittelt, um die Seitenverschiebungen des Mediums zu korrigieren. Bei diesem bekannten Verfahren sind somit zwei Referenzspuren und zwei zugehörige Leseeinrichtungen erforderlich, die ebenfalls fest angeordnet sind. Für eine Ermittlung der Kante des Mediums ist auch dieses bekannte Verfahren nicht vorgesehen und auch nicht geeignet.

Der Erfindung liegt daher die Aufgabe zugrunde, ein Verfahren anzugeben, mit welchem auf einfache Weise selbsttätig ein Erkennen der Kante eines magnetischen Aufzeichnungsmediums bei jedem Schreib- oder Lesevorgang möglich ist.

Diese Aufgabe wird bei dem Verfahren der eingangs genannten Art durch die im kennzeichnenden Teil des Anspruchs 1 angegebenen Merkmale gelöst.

Dieses Verfahren bietet eine Reihe von Vorteilen. Da das Lese- und Schreibsystem sehr genau auf eine Kante ausgerichtet werden kann, ist es möglich, auf dem Medium eine Anzahl von Spuren aufzuzeichnen, welche sehr eng beieinander liegen. Damit kann ein Medium mit hoher Kapazität eingesetzt werden. Da immer die im Augenblick tatsächliche Lage der Kante feststellbar ist, werden Fehler, die von Temperatur, Luftfeuchtigkeit, Herstellungstoleranzen und so weiter abhängen, vermieden.

Weiterbildungen der Erfindung ergeben sich aus den Ansprüchen.

Im folgenden wird ein vorteilhaftes Ausführungsbeispiel der Erfindung anhand weiter beschrieben.

Figuren 1 bis 3 zeigen eine prinzipielle Anordnung eines Lese- und Schreibsystems an einem Magnetband,

Figuren 4 bis 6 zeigen einen Teil des Magnetbandes,

Figuren 7 bis 10 zeigen jeweils einen Verlauf eines Lesesignales,

Figur 11 zeigt eine prinzipielle Schaltungsanordnung zur Durchführung des Verfahrens,

Figuren 12 und 13 zeigen eine Schaltungsanordnung entsprechend Fig. 11.

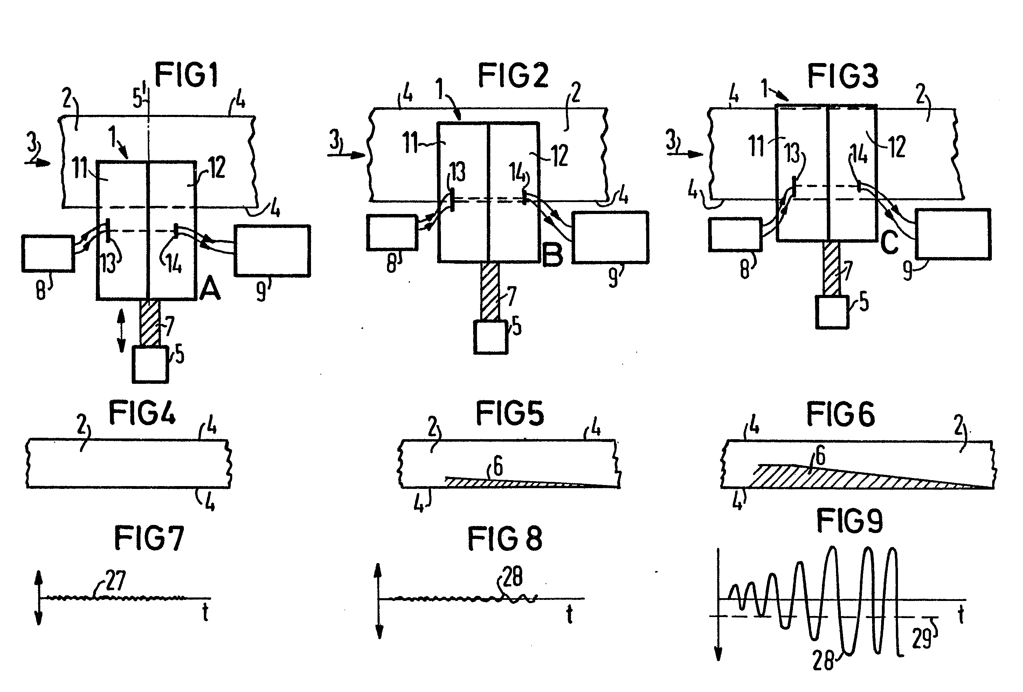

Fig. 1 zeigt ein Lese- und Schreibsystem 1, welches eine mit einem Schreibspalt 13 versehen Schreibeinrichtung 11 und eine mit einem Lesespalt 14 versehene Leseeinrichtung 12 aufweist. Ein als Band 2 mit zwei Kanten 4 ausgebildetes, magnetisches Medium bewegt sich in einer Bewegungsrichtung 3 von der Schreibeinrichtung 11 zur Leseeinrichtung 12, Beide weisen jeweils eine Induktionswicklung auf. Bei der Schreibeinrichtung 11 ist diese mit einem Sender 8 verbunden, welcher ein Schreibsignal erzeugt. Bei der Leseeinrichtung 12 ist sie mit einer Detektoreinrichtung 9 verbunden. Das Lese/Schreibsystem 1 ist auf einer Positioniervorrichtung 5, 7 angeordnet, mit welcher es in einer quer zur Bewegungsrichtung 3 nahezu senkrecht verlaufenden Geraden 5 bewegbar ist. Die Positioniervorrichtung besteht aus einem von einem Schrittmotor 5 angetriebenen Kopfträger 7. Der Lesespalt 14 ist kürzer als der Schreibspalt 13, um sicherzustellen, daß er über der vom Schreibspalt 13 aufgezeichneten Spur angeordnet ist. Das Lese- und Schreibsystem 1 befindet sich in einer Stellung A, bei welcher der Schreibspalt 13 und der Lesespalt 14 neben dem Band 2 liegen.

In Fig. 2 befindet sich die Abtasteinrichtung in einer Stellung B, bei welcher der Schreibspalt 13 und der Lesespalt 14 gerade über der Kante 4 liegen. In Fig. 3 liegen der Schreibspalt 13 und der Lesespalt 14 vollständig über dem Band 2 (Stellung C).

In Fig. 4 ist ein Band 2 dargestellt, auf welchem kein Schreibsignal aufgezeichnet ist. In Fig. 5 ist ein schmaler Bereich 6 nahe der Kante 4 mit einem Schreibsignal beschrieben. In Fig. 6 ist dieser Bereich 6 breiter als der in der Fig. 5 dargestellte. Er entspricht der Breite einer vom Schreibspalt 13 aufgezeichneten Spur.

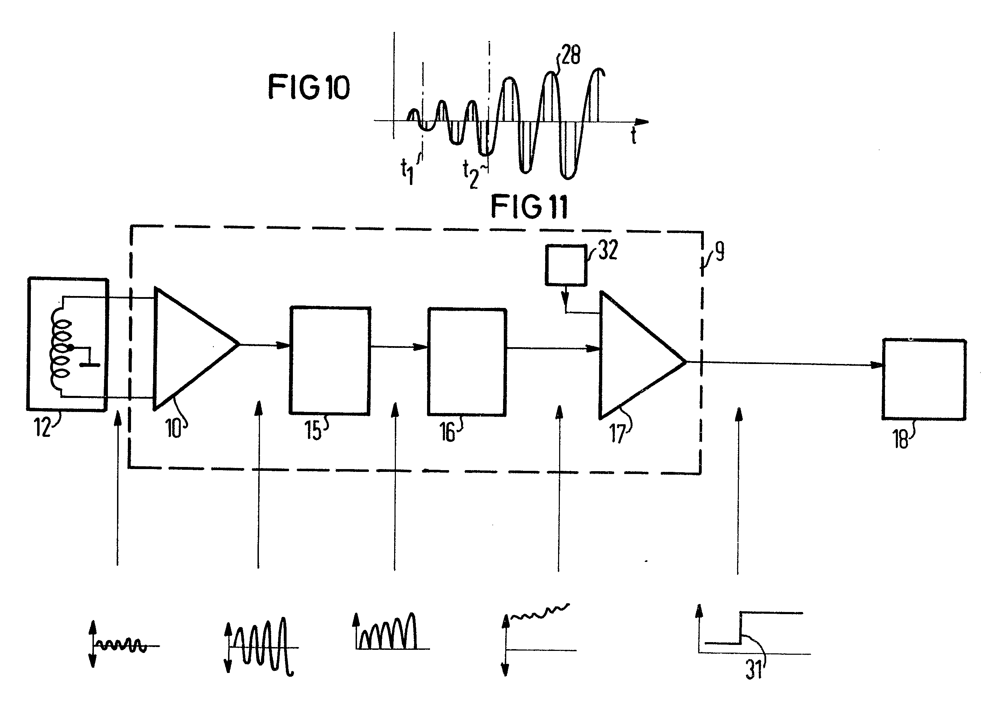

Fig. 7 zeigt den Verlauf eines Lesesignales 28 über der Zeit t, welches beim Lesen eines Bandes 2 bei Stellung A von der Leseeinrichtung 12 erzeugt wird. Das Lesesignal 28 ist ein zu einem magnetischen Flußwechsel proportionaler Spannungswert. Ein kleiner Flußwechsel erzeugt ein Lesesignal 28 kleiner Amplitude, während ein großer Flußwechsel eine große Amplitude zur Folge hat. Die Amplitude ist Null, wenn kein Flußwechsel vorhanden ist. Fig. 8 zeigt den Verlauf des Lesesignales 28, welches beim Lesen des Bandes in Stellung B erzeugt wird. Fig. 9 zeigt den Verlauf beim Lesen in Stellung C. In Fig. 10 ist der Spannungsverlauf in digitaler Form dargestellt. Er wird zu einem ersten Zeitpunkt t1 und zu einem zweiten Zeitpunkt t2 abgefragt.

Das Verfahren ist im folgenden beschrieben. In Stellung A wird mit einer festen Frequenz vom Sender 8 ein Schreibsignal an die Schreibeinrichtung 11 gegeben, während sich das Band 2 bewegt und von der Leseeinrichtung 12 ein Lesevorgang durchgeführt wird. Da der Schreibspalt 13 neben dem Band 2 liegt, wird darauf kein Flußwechsel erzeugt. Das heißt, das Band 2 ist leer (Fig. 4). Ein Störsignal kann natürlich vorhanden sein. Das Lesesignal 28 weist nur einen Störpegel 27 auf (Fig. 7).

Das Lese- und Schreibsystem 1 wird dann kontinuierlich oder schrittweise auf das Band 2 zubewegt. Sobald der Schreibspalt 13 die Kante 4 überschreitet, wird auf dem Band 2 ein Schreibsignal aufgezeichnet (Stellung B). Die Aufzeichnung erfolgt in dem Bereich 6, der umso breiter wird, je weiter der Schreibspalt 13 über das Band 2 bewegt wird. Je breiter dieser Bereich 6 ist, desto größer wird die Amplitude des Lesesignales 28. Das Maximum der Amplitude wird erreicht, wenn sich der Schreibspalt 13 vollständig über dem Band 2 befindet. (Stellung C), da dann auch der Bereich 6 am breitesten ist. In Fig. 8 ist der der Stellung B und in Fig. 9 der der Stellung C entsprechende Bereich 6 dargestellt.

Beim Übergang von Stellung A in Stellung C, das heißt beim Überqueren der Kante 4, erfolgt also eine signifikante Änderung des Lesesignals 28, so daß diese Änderung zum Erkennen der Kante 4 verwendet werden kann. Das Erkennen dieser Änderung entspricht der Identifizierung des auf dem Band 2 aufgezeichneten Schreibsignales.

Eine Methode (statische Methode), um die Änderung des Lesesignals 28 festzustellen, ist, das Lesesignal 28 mit einem konstanten, vorgegebenen Referenzwert 29 zu vergleichen. Sobald das Lesesignal 28 den Referenzwert 29 übersteigt, ist das Schreibsignal identifiziert.

Eine andere Methode (dynamische Methode) ist, die Amplitude des Lesesignals 28 zu einem bestimmten Zeitpunkt (erster Zeitpunkt t1) abzufragen und zu speichern und mit der Amplitude eines zu einem späteren Zeitpunkt (zweiter Zeitpunkt t2) gelesenen Lesesignals 28 zu vergleichen. Dadurch kann eine in dieser Zeitspanne stattgefundene Änderung der Amplitude erkannt werden. Es wird die Differenz der beiden Amplitudenwerte gebildet und mit einem vorgegebenen Referenzwert 29 verglichen. Ist die Differenz größer als der Referenzwert 29, so ist das Schreibsignal identifiziert. Das Lese- und Schreibsystem 1 kann natürlich auch in umgekehrter Richtung von Stellung C zu Stellung A bewegt werden. Sobald das Schreibsignal identifiziert ist, bzw. die Änderung erkannt ist, wird ein die Kante 4 anzeigendes Detektorsignal 30 von der Detektoreinrichtung 9 abgegeben. Der Schreibspalt 13 und der Lesespalt 14 befinden sich dann genau über der Bandkante 4. Dann wird ein der Position des Lese- und Schreibsystems entsprechender Meßwert gebildet. Er gibt die Lage der Kante 4 an.

Auf seiner Grundlage können die einzelnen Spuren auf dem Band 4 mit der Positioniervorrichtung 5, 7 genau angesteuert werden.

Es können auch beide Kanten 4 des Bandes 2 ermittelt werden. Wenn aus den dabei erhaltenen beiden Meßwerten ein zweiter Mittelwert gebildet wird, ist damit die Bandmitte festgestellt. Sie kann ebenfalls als Grundlage zur Ansteuerung der einzelnen Spuren verwendet werden.

Die dynamische Methode hat gegenüber der statischen Methode den Vorteil, daß Fehler vermindert werden, die beispielsweise von Temperaturunterschieden oder Unterschieden in den magnetischen Medien usw. abhängen.

Die Genauigkeit des Verfahrens kann noch erhöht werden, wenn das Lese- und Schreibsystem 1 bis über das Band 2 bewegt wird und anschließend wieder zurückbewegt wird, bis es sich nicht mehr über dem Band 2 befindet. Aus beiden dabei ermittelten Meßwerten wird ein erster Mittelwert gebildet, welcher die Lage der Kante 4 festlegt.

Im folgenden ist eine Vorrichtung zur Durchführung des Verfahrens beschrieben.

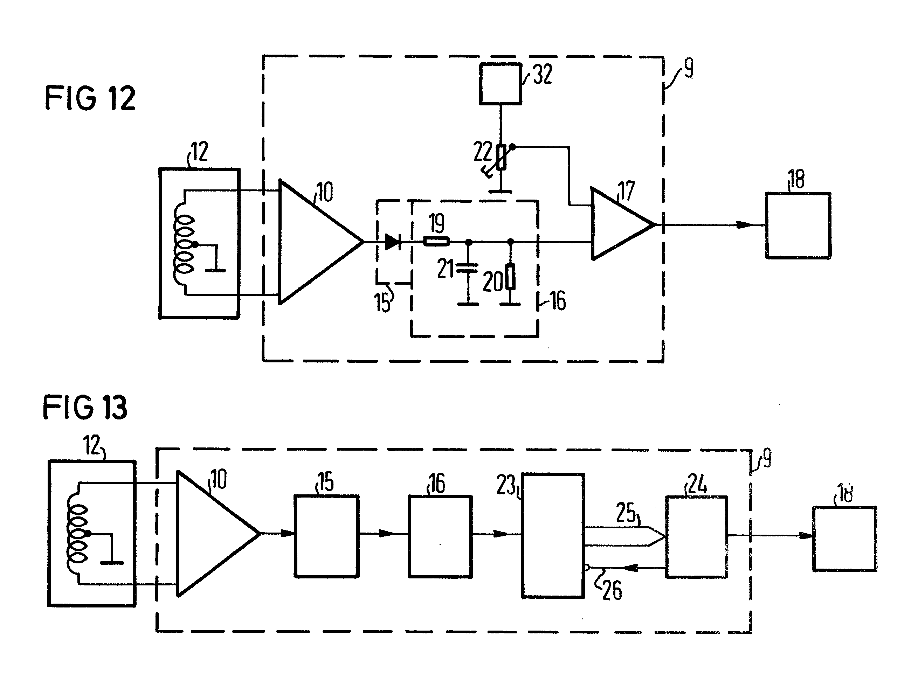

Fig. 11 zeigt die Leseeinrichtung 12, deren Wicklung über eine Detektoreinrichtung 9 mit der Steuereinrichtung 18 verbunden ist. Die Detektoreinrichtung 9 besteht aus einem das Lesesignal 28 verstärkenden Verstärker 10, dessen Ausgang über einen Gleichrichter 15 und einen nachgeschalteten Integrator 16 mit einem Eingang eines Vergleichers 17 verbunden ist. An desser anderen Eingang liegt eine Referenzspannungsquelle 32 an. Ihre Spannung dient als Referenzwert 29.

Die Detektoreinrichtung 9 erzeugt das Detektorsignal 30. Es besteht aus einer Flanke 31 im Ausgangssignal der Detektoreinrichtung 9. Das Detektorsignal 30 wird erzeugt, wenn auf dem Band 2 das Schreibsignal erkannt wird, d. h. wenn die im Vorhergehenden beschriebene Änderung der Amplitude des Lesesignals 28 erkannt wird. Das verstärkte Lesesignal 28 wird integriert, um Fehler, welche durch sogenannte « drop outs » entstehen können, zu vermindern. Die Steuereinrichtung 18 steuert die Ausgabe des Schreibsignals und die Bewegung der Positioniervorrichtung 5, 7. An den Verbindungsleitungen sind jeweils Verläufe der Ausgangssignale dargestellt.

In Fig. 12 ist die Schaltungsanordnung der Detektoreinrichtung 9 zur Anwendung für die statische Methode dargestellt. Der Gleichrichter 15 besteht aus einer Diode. Der Integrator 16 besteht aus einem zwischen seinem Eingang und Ausgang geschalteten ersten Widerstand 19, an welchen eine mit Masse verbundene Parallelschaltung eines zweiten Widerstandes 20 und einer Kapazität 21 anliegt. Die Referenzspannungsquelle 32 ist über einen dritten, variablen Widerstand 22 mit dem Vergleicher 17 verbunden. Am dritten Widerstand 22 wird der Referenzwert 29 (Fig. 9) festgelegt.

Falls die dynamische Methode verwendet wird (Fig. 13), besteht die Detektoreinrichtung aus einem mit dem Verstärker 10 über einen Gleichrichter 15 und einen Integrator 16 verbundenen, das Lesesignal digitalisierenden Analog-Digitalwandler 23. Dessen Ausgang ist über eine acht Bit breite BUS-Leitung 25 und eine Auswahlleitung 26 mit einer Recheneinrichtung 24 verbunden. Von dieser wird zu einem ersten Zeitpunkt t1, ein Auswahlsignal auf der Auswahlleitung 26 gegeben, wodurch das digitalisierte Lesesignal 28 abgefragt und gespeichert wird. Nach einer vorgegebenen Zeit (Zeitpunkt t2) wird das digitalisierte Lesesignal 28 ein zweites Mal abgefragt und die differenz aus beiden gebildet. Außerdem ist ein Referenzwert aus beiden gebildet. Außerdem ist ein Referenzwert abgespeichert, mit welchem die Differenz verglichen wird. Das Detektorsignal wird abgegeben, wenn die Differenz größer als der Referenzwert ist.

## Ansprüche

1. Verfahren zum Erkennen einer Kante eines magnetischen Mediums, das relativ zu einer Leseeinrichtung bewegt wird, gekennzeichnet durch folgende Verfahrensschritte :

a) Aufzeichnen eines Schreibsignals auf das Medium (2) mittels einer Schreibeinrichtung (11) eines die Schreibeinrichtung (11) und die Leseeinrichtung (12) aufweisenden Lese- und Schreibsystems (1),

b) Verschieben des Lese- und Schreibsystems (1) derart, daß die Schreibeinrichtung (11) und die Leseeinrichtung (12) senkrecht zur Bewegungsrichtung des Mediums (2) in Richtung zur Kante (4) und über die Kante (4) des Mediums (2) hinwegbewegt werden,

c) Lesen des unmittelbar vorher aufgezeichneten Schreibsignals und Erzeugen eines Lesesignals (28) mittels der Leseeinrichtung (12) während der Bewegung des Lese- und Schreib-Systems (1),

d) Vergleichen des Lesesignals (28) mit einem der Kante (4) des Mediums (2) zugeordneten Referenzwert (29),

e) Abgeben eines die Kante (4) des Mediums (2) anzeigenden Detektorsignals, wenn das dem Schreibsignal zugeordnete Lesesignal den Referenzwert erreicht hat.

2. Verfahren nach Anspruch 1, dadurch gekennzeichnet, daß als Referenzwert (29) ein konstanter Referenzwert verwendet wird.

3. Verfahren nach Anspruch 1 oder Anspruch 2, dadurch gekennzeichnet, daß der Momentanwert des Lesesignals (28) zu einem ersten Zeitpunkt (t1) gespeichert wird, daß der Momentanwert des Lesesignals (28) zu einem zweiten Zeitpunkt (t2) ermittelt wird und daß die Differenz der beiden Momentanwerte mit dem Referenzwert (29) verglichen wird.

4. Verfahren nach einem der Ansprüche 1 bis 3, dadurch gekennzeichnet, daß beim Auftreten des Detektorsignals ein die Position des Lese- und Schreibsystems (1) bzw. der Kante (4) angebender Meßwert gebildet wird.

5. Verfahren nach Anspruch 4, dadurch gekennzeichnet, daß als Medium (2) ein Magnetband verwendet wird, daß das Lese- und Schreibsystem (1) senkrecht zur Bewegungsrichtung des Magnetbands bis über dieses hinaus und wieder zurück bewegt wird, bis es sich nicht mehr über dem Magnetband befindet, daß dabei jeweils der Meßwert gebildet wird und daß aus beiden Meßwerten ein Mittelwert gebildet wird.

6. Vorrichtung zur Durchführung des Verfahrens nach Anspruch 1, dadurch gekennzeichnet, daß die Schreibeinrichtung (11) mit einem das Schreibsignal erzeugenden Sender (8) verbunden ist, daß die Leseeinrichtung (12) mit einer die Kante (4) des Mediums (2) erkennenden Detektoreinrichtung (9) verbunden ist, daß der Sender (8) und die Detektoreinrichtung (9) mit einer Steuereinheit (18) verbunden sind, die ihrerseits mit einer Einstellvorrichtung (5, 7) für das Lese- und Schreibsystem (1) verbunden ist.

7. Vorrichtung nach Anspruch 6, dadurch gekennzeichnet, daß die Detektoreinrichtung (9) einen mit der Leseeinrichtung (12) verbundenen, das Lesesignal (28) verstärkenden Verstärker (10) enthält, dessen Ausgang über einen Gleichrichter (15) mit einem nachgeschalteten Integrator (16) verbunden ist, und daß der Ausgang des Integrators (16) mit dem einen Eingang eines Vergleichers (17) verbunden ist, an dessen anderem Eingang eine Referenzspannungsquelle (32) angeschlossen ist.

8. Vorrichtung nach Anspruch 6, dadurch gekennzeichnet, daß die Detektoreinrichtung (9) einen mit der leseeinrichtung (12) verbundenen, das Lesesignal (28) verstärkenden Verstärker (10) enthält, dem ein Gleichrichter (15) und ein Integrator (16) nachgeschaltet sind, und einen das integrierte Lesesignal (28) digitalisierenden Analog-Digital-Wandler (23) enthält, dem eine Recheneinrichtung (24) nachgeschaltet ist.

## Claims

1. A method for recognising an edge of a magnetic medium which is moved relative to a read device characterised by the following method steps :

a) recording of a write signal on to the medium (2) by means of a write device (11) of a read- and writesystem (1) which comprises the write device (11) and the read device (12),

b) displacement of the read- and write-system (1) in such manner that the write device (11) and the read device (12) are moved at right angles to the direction of movement of the medium (2) in the direction of the edge (4) and across the edge (4) of the medium (2),

c) reading of the immediately previously recorded write signal and generation of a read signal (28) by means of the read device (12) during the movement of the read- and write-system (1),

d) comparison of the read signal (28) with a reference value (29) assigned to the edge (4) of the medium (2),

e) emission of a detector signal, which indicates the edge of the medium (2), when the read signal assigned to the write signal has reached the reference value.

2. A method as claimed in claim 1, characterised in that a constant reference value is used as reference value (29).

3. A method as claimed in claim 1 or 2, characterised in that the instantaneous value of the read signal (28) is stored at a first time (t1), that the instantaneous value of the read signal (28) is determined at a second time (t2), and that the difference between the two instantaneous values is compared with the reference value (29).

4. A method as claimed in one of the claims 1 to 3, characterised in that on the occurrence of the detector signal, a measured value is formed which indicates the position of the read- and write-system (1) and of the edge (4).

5. A method as claimed in claim 4, characterised in that a magnetic tape is used as medium (2), that the read- and write-system (1) is moved at right angles to the direction of movement of the magnetic tape beyond the latter and back again until it is no longer located over the magnetic tape, that on each occasion the measured value is thereby formed and that a mean value is formed from the two measured values.

6. A device for the implementation of the method claimed in claim 1, characterised in that the write device (11) is connected to a transmitter which generates the write signal, that the read device (12) is connected to a detector device (9) which recognises the edge (4) of the medium (2), that the transmitter (8) and the detector device (9) are connected to a control unit (18) which is itself connected to a setting device (5, 7) for the read- and write-system (1).

7. A device as claimed in claim 6, characterised in that the detector device (9) includes an amplifier (10) which is connected to the read device (12), amplifier (10) which is connected to the read device (12), amplifies the read signal (28), and whose output is connected via a rectifier (15) to a following integrator (16), and that the output of the integrator (16) is connected to the first input of a comparator (17) whose other input is connected to a reference voltage source (32).

8. A device as claimed in claim 6, characterised in that the detector device (9) includes an amplifier (10) which is connected to the read device (12), amplifies the read signal (28) and which is followed by a rectifier (15) and an integrator (16), and further includes an analoguedigital converter (23) which digitalises the integrated read signal (28) and is followed by a calculating device (24).

## Revendications

1. Procédé pour détecter un bord d'un support magnétique qui est déplacé par rapport à un dispositif de lecture, caractérisé par les phases opératoires suivantes :

a) enregistrement d'un signal d'écriture sur le support (2) à l'aide d'un dispositif d'écriture (11) d'un système de lecture et d'écriture (1) comportant le dispositif d'écriture (11) et le dispositif de lecture (12),

b) déplacement du système de lecture et d'écriture (1) de telle manière que le dispositif d'écriture (11) et le dispositif de lecture (12) soient déplacés perpendiculairement à la direction du déplacement du support (2), en direction du bord (4) et au-delà du bord (4) du support (2),

c) lecture du signal d'écriture enregistré immédiatement avant, et production d'un signal de lecture (28) à l'aide du dispositif de lecture (12), pendant le déplacement du système de lecture et d'écriture (1),

d) comparaison du signal de lecture (28) avec une valeur de référence (29) associée au bord (4) du support (2),

e) émission d'un signal de détection indiquant le bord (4) du support (2), lorsque le signal de lecture associé au signal d'écriture atteint la valeur de référence.

2. Procédé selon la revendication 1, caractérisé par le fait que l'on utilise, comme valeur de référence (29), une valeur de référence constante.

3. Procédé selon la revendication 1 ou la revendication 2, caractérisé par le fait que la valeur instantanée du signal de lecture (28) est mémorisée à un premier instant (t1), que la valeur instantanée du signal de lecture (28) est déterminée à un second instant (t2), et que la différence des deux valeurs instantanées est comparée avec la valeur de référence (29).

4. Procédé selon l'une des revendications 1 à 3, caractérisé par le fait que lors de l'apparition du signal de détection, on forme une valeur de mesure qui indique la position du système de lecture et d'écriture (1) ou du bord (4).

5. Procédé selon la revendication 4, caractérisé par le fait que l'on utilise, comme support (2), une bande magnétique, que le signal de lecture et d'écriture (1) est déplacé perpendiculairement à la direction de déplacement du ruban magnétique jusqu'à au-delà de ce dernier et est ensuite ramené en arrière jusqu'à ce qu'il ne se trouve plus au-dessus du ruban magnétique, que ce faisant, on forme la valeur de mesure et qu'on forme une valeur moyenne à l'aide des deux valeurs de mesure.

6. Dispositif pour la mise en œuvre du procédé selon la revendication 1, caractérisé par le fait que le dispositif d'écriture (11) est relié à un émetteur (8) qui produit le signal d'écriture, que le dispositif de lecture (12) est relié à un dispositif détecteur (9) qui identifie le bord (4) du support (2), que l'émetteur (8) et le dispositif détecteur (9) sont reliés à une unité de commande (18) qui, à son tour, est reliée à un dispositif de réglage (5, 7) pour le système de lecture et d'écriture (1).

7. Dispositif selon la revendication 6, caractérisé par le fait que le dispositif détecteur (9) comporte un amplificateur (10) qui est relié au dispositif de lecture (12) et qui amplifie le signal de lecture (28) amplificateur dont la sortie est reliée, par l'intermédiaire d'un redresseur (15), à un intégrateur aval (16), et que la sortie de l'intégrateur (16) est reliée à une entrée d'un comparateur (17) à l'autre entrée duquel est reliée une source de tension de référence (32).

8. Dispositif selon la revendication 6, caractérisé par le fait que le dispositif détecteur (9) comporte un amplificateur qui est relié au dispositif de lecture (12) et qui amplifie le signal de lecture (28), amplificateur en aval duquel sont montés un redresseur (15) et un intégrateur (16), et comporte un convertisseur analogique-numérique (23) qui numérise le signal de lecture intégré, convertisseur analogique-numérique en aval duquel est prévu un dispositif de calcul (24).

FIG1

FIG2

FIG3

FIG4

FIG5

FIG6

FIG7

FIG 8

FIG9

0 062 279

FIG 10

FIG 11

28

$t_1$  $t_2$

t

9

32

17

18

31

16

15

10

12

2

FIG 12

FIG 13